# EUROPEAN PATENT APPLICATION

(11) **EP 2 351 894 A1**
(43) Date of publication of application: **03.08.2011**
(21) Application number: 09824788.5
(22) Date of filing: 04.11.2009
(51) Int. Cl.: E04D 13/18, H01L 31/042

(54) **MOUNT FOR SOLAR CELL MODULE, AND PHOTOVOLTAIC POWER GENERATION SYSTEM USING THE MOUNT**

(30) Priority: 05.11.2008 JP 2008284181
(71) Applicant: Sharp Kabushiki Kaisha, Osaka-shi, Osaka 545-8522 (JP)
(72) Inventor: SAGAYAMA, KENICHI, Osaka-shi, Osaka 545-8522 (JP)
(74) Representative: Hoffmann, Jörg Peter
(86) International application number: PCT/JP2009/068826
(87) International publication number: WO 2010/053089

(57) **Abstract**

According to one embodiment, a frame member (21) of a solar cell module (2) is fixedly supported in a sandwiched manner between a lower fixing fitting (4) and an upper fixing fitting (3a). A protruding flange (44a) of an upper plate (40) of the lower fixing fitting (4) is pressed against the surface of the frame member (21) of the solar cell module (2). When a bolt (8) is tightly fastened, the upper plate (40) and the frame member (21) come into tightly abutting contact with each other, and the protruding flange (44a) of the upper plate (40) press into the surface of the frame member (21) of the solar cell module (2), thereby establishing an electrical connection.

## Description

### Technical Field

The present invention relates to a solar cell module stand for fixedly supporting solar cell modules and a solar power generation system using the same.

### Background Art

Generally, when solar cell modules are installed on the roof or the like, a solar cell module stand is attached on the roof or the like, solar cell modules are mounted and fixed onto the stand, and the frames or the like of the solar cell modules are grounded by a wire connection in order to ground electric charges charged by power generation of the solar cells.

However, it is a complex operation to provide an earth wire in the solar cell panels because an insulating film is provided on the outer surface of the frames of the solar cell modules formed of a conductive metal body. To address this, solar cell panel attachment stands have been proposed in which earth grounding can be done easily and reliably.

For example, Patent Document 1 discloses a solar cell panel attachment stand provided with microprotrusions 15 that become electrically conductive by pressing into the frame material of solar cell panels.

### Prior Art Document

### Patent Document

Patent Document 1: JP 2007-211435 A

### Summary of Invention

### Problems to be Solved by the Invention

However, such microprotrusions as described in Patent Document 1 that do not rattle even when solar cell panels are mounted on the stand have a low strength, and thus a situation can occur in which when the frame is pressed from above, the microprotrusions collapse before pressing into the frame. Alternatively, when the solar cell module frame is adjusted in position after the microprotrusions have pressed into the frame, or when the solar cell module frame is offset on impact, stable electrical connections between the solar cell modules and the microprotrusions cannot be made due to the microprotrusions being collapsed or crushed.

In the case where the solar cell module frame is made of, for example, an aluminum material, because the aluminum surface has an insulating oxide film, if the microprotrusions are further shifted in position by being collapsed or crushed, the microprotrusions will come into contact with the oxide film on the aluminum surface, and thus conduction of the solar cell module frame via the microprotrusions will be difficult.

The present invention has been conceived in view of the problems encountered with the conventional technology, and it is an object of the present invention to provide a solar cell module stand in which stable grounding for solar cell modules can be accomplished with a simple operation, and a solar power generation system using the same.

### Means for Solving the Problems

In order to solve the above problems, the present invention provides a solar cell module stand for fixedly supporting a solar cell module, the stand including: an abutting member that abuts a frame of the solar cell module; a fastening member that fastens the frame of the solar cell module and the abutting member; a through hole formed in the abutting member; and a protruding flange projecting toward the frame of the solar cell module and provided at the circumference of the through hole, wherein the protruding flange around the circumference of the through hole of the abutting member is caused to press into the frame of the solar cell module by fastening the fastening member, thereby establishing an electrical connection.

For example, the abutting member includes a fastening hole into which the fastening member is screwed or inserted, and the through hole having the protruding flange is provided around the fastening hole.

Alternatively, the abutting member may include an insertion hole into which the fastening member is inserted, and the insertion hole may be the through hole having the protruding flange.

Also, it is preferable that the protruding flange is formed in an annular shape around the circumference of the through hole.

Also, in the present invention, it is preferable that the abutting member is a holding member that receives and holds the frame of the solar cell module, or the abutting member is a bar on which the frame of the solar cell module can be mounted.

Furthermore, a solar cell system according to the present invention includes the solar cell module stand configured as described above, and a plurality of solar cell module frames are fastened to the abutting member with the fastening member, establishing an electrical connection.

More specifically, in the solar cell module stand of the present invention, the abutting member is grounded, and the protruding flange around the circumference of the through hole of the abutting member is caused to press into the solar cell module frame by fastening the fastening member, thereby establishing an electrical connection. Accordingly, by simply carrying out an operation of fastening the fastening member, the protruding flange around the circumference of the through hole of the abutting member can be caused to press into the solar cell module frame, and the solar cell module frame can be grounded via the abutting member.

The fastening member can be a bolt, a nut or the like necessary to assemble the stand. Bolts, nuts and the like can be used in a plurality of locations to fasten the solar cell module frame and the stand, and thus by using a portion or a component of the stand as the abutting member, forming a protruding flange around the circumference of a through hole in the abutting member, and fastening the solar cell module frame and the abutting member with a bolt, a nut or the like, the solar cell module frame can be grounded via the abutting member at the same time the solar cell module frame and the abutting member are fastened. It is therefore unnecessary to separately carry out a wire connecting operation for grounding or the like.

Also, when the protruding flange around the circumference of the through hole of the abutting member has an annular shape, the protruding flange can receive force from any direction that tries to push over the protruding flange in a dispersed manner over the entire protruding flange, and has a high strength against such face from any direction. For this reason, even when the solar cell module is adjusted in position, or the solar cell module is offset on impact after the protruding flange around the circumference of the through hole of the abutting member has pressed into the solar cell module frame, the protruding flange will not be collapsed or crushed, and therefore the electrical connection between the solar cell module and the abutting member will not be cut off, and stable grounding for the solar cell module can be maintained.

For example, even when an aluminum material is used for the solar cell module frame, and an insulating oxide film is formed on the aluminum surface, the protruding flange around the circumference of the through hole of the abutting member will not be collapsed or crushed due to the solar cell module frame being adjusted in position or being offset, and therefore the protruding flange of the abutting member can break through the oxide film on the aluminum surface and press into the solar cell module frame, establishing an electrical connection, as a result of which stable grounding for the solar cell module can be maintained.

The abutting member includes, for example, a fastening hole into which the fastening member is screwed or inserted, and a through hole having a protruding flange is provided around the fastening hole. Alternatively, the abutting member includes an insertion hole into which the fastening member is inserted, and this insertion hole is the through hole having a protruding flange. With any of the configurations, a through hole having a protruding flange is provided near the fastening location of the abutting member, and thus the fastening force of the fastening member reliably acts on the protruding flange provided near the fastening location to cause the protruding flange to press into the solar cell module frame, establishing an electrical connection.

As the abutting member, a holding member that receives and holds the solar cell module frame, a bar on which the solar cell module frame is mounted, or the like can be used. Both the holding member and the bar are a portion or a component of the stand, and thus not a special component. Accordingly, the solar cell module frame can be grounded using the existing components, and thus an increase in the number of components, cost and the like does not occur.

### Effects of the Invention

With the solar cell module stand of the present invention, stable grounding for solar cell modules can be accomplished with a simple operation. Also, with a solar power generation system using such a solar cell module stand, it is possible, for each solar cell module, to make a wire connection for grounding solar cell modules simultaneously with installation of the solar cell module, and therefore complex tasks can be eliminated.

### Brief Description of Drawings

[FIG. 1] FIG. 1 is a perspective view of a solar cell module stand according to a first embodiment of the present invention.
[FIG. 2] FIG. 2 is a side view of a stand unit according to the first embodiment.
[FIG. 3] FIG. 3 is an enlarged cross-sectional view of a frame member of a solar cell module according to the first embodiment.
[FIGS. 4] FIG. 4(a) is a perspective view showing a state in which edges of two solar cell modules, arranged one on the right and the other on the left, have been mounted and attached onto an attachment bar of a center stand unit according to the first embodiment as viewed from above, and FIG. 4(b) is a perspective view of the same as viewed from below.
[FIG. 5] FIG. 5 is a cross-sectional view of FIG. 4(a).
[FIG. 6] FIG. 6 is a perspective view of an attachment bar of a stand unit according to the first embodiment.
[FIG. 7] FIG. 7 is a perspective view of an upper fixing fitting according to the first embodiment.
[FIG. 8] FIG. 8 is a perspective view of a lower fixing fitting according to the first embodiment.
[FIG. 9] FIG. 9 is a plan view of the lower fixing fitting being bent according to the first embodiment.
[FIG. 10] FIG. 10 is a perspective view of the lower fixing fitting being bent according to the first embodiment, as viewed from the surface side.
[FIG. 11] FIG. 11 is a perspective view of the lower fixing fitting being bent according to the first embodiment, as viewed from the underside.
[FIG. 12] FIG. 12 is a perspective view showing a state in which the lower fixing fitting has been attached to the attachment bar according to the first embodiment.
[FIG. 13] FIG. 13 is a perspective view showing a process for attaching the lower fixing fitting on the attachment bar according to the first embodiment.
[FIG. 14] FIG. 14 is a perspective view showing a process subsequent to the process of FIG. 13.
[FIG. 15] FIG. 15 is a perspective view showing a process subsequent to the process of FIG. 14.
[FIG. 16] FIG. 16 is a perspective view showing a process subsequent to the process of FIG. 15.
[FIG. 17] FIG. 17 is a cross-sectional view showing an attachment structure for attaching an edge of a solar cell module for right and left side stand units according to the first embodiment.
[FIG. 18] FIG. 18 is a perspective view of an upper fixing fitting used in the attachment structure of FIG. 17.
[FIGS. 19] FIGS. 19(a) and 19(b) are diagrams showing a process for forming a sharp-edged annular protruding flange according to the first embodiment.
[FIG. 20] FIG. 20 is a partial cross-sectional view of a solar cell module stand according to a second embodiment of the present invention.
[FIG. 21] FIG. 21 is a perspective view showing an attachment bar of a stand unit according to the second embodiment.
[FIG. 22] FIG. 22 is a perspective view of a tapping fitting according to the second embodiment.
[FIGS. 23] FIGS. 23(a) and 23(b) are diagrams showing a process for attaching the tapping fitting to the attachment bar according to the second embodiment.
[FIG. 24] FIG. 24 is a perspective view showing a variation of the sharp-edged annular protruding flange.
[FIG. 25] FIG. 25 is a diagram showing a conventional grounding structure for solar cell modules.

### Modes for Carrying out the Invention

Hereinafter, embodiments of the present invention will be described in detail with reference to the drawings.

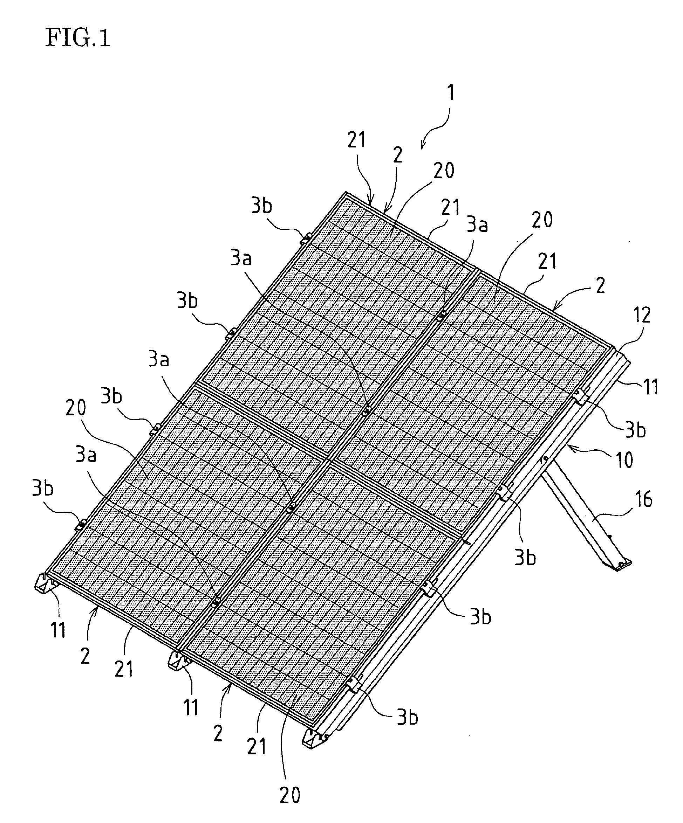

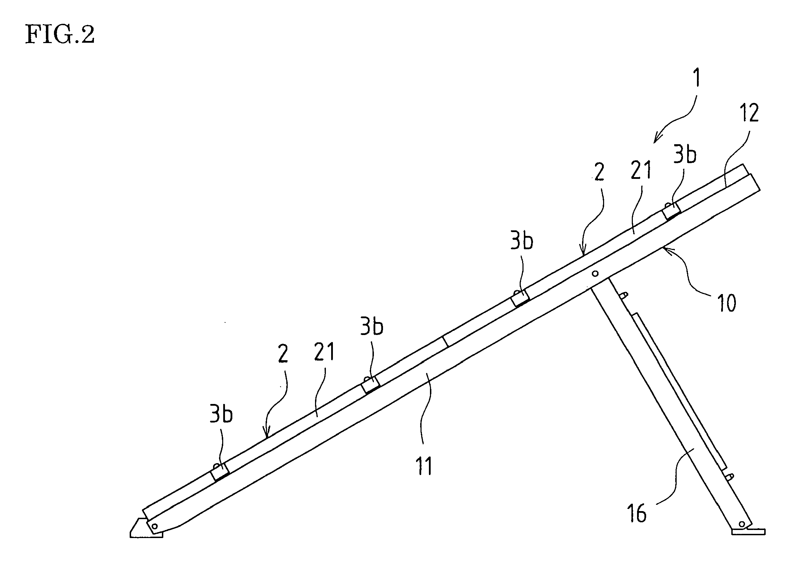

FIG. 1 is a perspective view of a solar cell module stand according to a first embodiment of the present invention. FIG. 2 is a side view of a stand unit according to the first embodiment.

In a solar cell module stand 1 of the present embodiment, three stand units 10 as shown in FIG. 2 are used. The stand units 10 are provided side by side on the roof, on the ground or the like, and as shown in FIG. 1, four solar cell modules 2 are mounted and fixed onto the stand units 10.

Each solar cell module 2 is constituted by a solar cell panel 20 and a frame member 21 for holding the solar cell panel 20.

As shown in FIG. 2, each stand unit 10 is constituted by an attachment bar 11 and a vertical bar 16, and is formed to have an inclined T shape as viewed from a side. Specifically, one stand 10 is formed by fixing, at a position one-quarter from the upper end of the obliquely disposed attachment bar 11, the distal end of the vertical bar 16 that is disposed at an incline in a direction opposite to the inclination of the attachment bar 11.

The three stand units 10 are provided side by side at a spacing that is substantially the same as the width of the solar cell module 2. Two solar cell modules 2 are arranged one directly above the other between an attachment bar 11 of a left side stand unit 10 and an attachment bar 11 of a center stand unit 10, and two solar cell modules are arranged one directly above the other between an attachment bar 11 of a right side stand unit 10 and the attachment bar 11 of the center stand unit 10. The edges of the four solar cell modules 2 in total are mounted and attached onto top faces 12 of the attachment bars 11 of the stand units 10.

Onto the top face 12 of the attachment bar 11 of the left side stand unit 10, the edges of two solar cell modules 2 arranged one above the other are mounted and attached. Likewise, onto the top face 12 of the attachment bar 11 of the right side stand unit 10, the edges of two solar cell modules 2 arranged one above the other are mounted and attached. Also, onto the top face 12 of the attachment bar 11 of the center stand unit 10, the edges of two solar cell modules 2 arranged one above the other are mounted and attached on the right, and the edges of two solar cell modules 2 arranged one above the other are mounted and attached on the left.

An overall description of an attachment structure for attaching an edge of the solar cell module 2 to the attachment bar 11 of the stand unit 10 used in the stand 1 of the present embodiment will be given next.

In the following description, the lengthwise direction of the attachment bar 11 of the stand unit 10 is referred to as the "front-rear direction". The direction in which the three stand units 10 are arranged side by side is referred to as the "right-left direction". The direction toward which the surface of the solar cell module 2 is facing is referred to as "upward", and the direction toward which the underside of the solar cell module 2 is facing is referred to as "downward".

As described above, on the top face 12 of the attachment bar 11 of each of the right and left side stand units 10, the edges of two solar cell modules 2 arranged one above the other are mounted. On the top face 12 of the attachment bar 11 of the center stand unit 10, the edges of two solar cell modules 2 arranged one above the other are mounted and attached on the right and the edges of two solar cell modules 2 arranged one above the other are mounted and attached on the left. Accordingly, the attachment structure for attaching an edge of the solar cell module 2 is different between the right and left side stand units 10 and the center stand unit 10, and therefore there are two types of attachment structures. These attachment structures will be described separately.

First, an attachment structure for attaching an edge of the solar cell module 2 for the center stand unit 10 will be described.

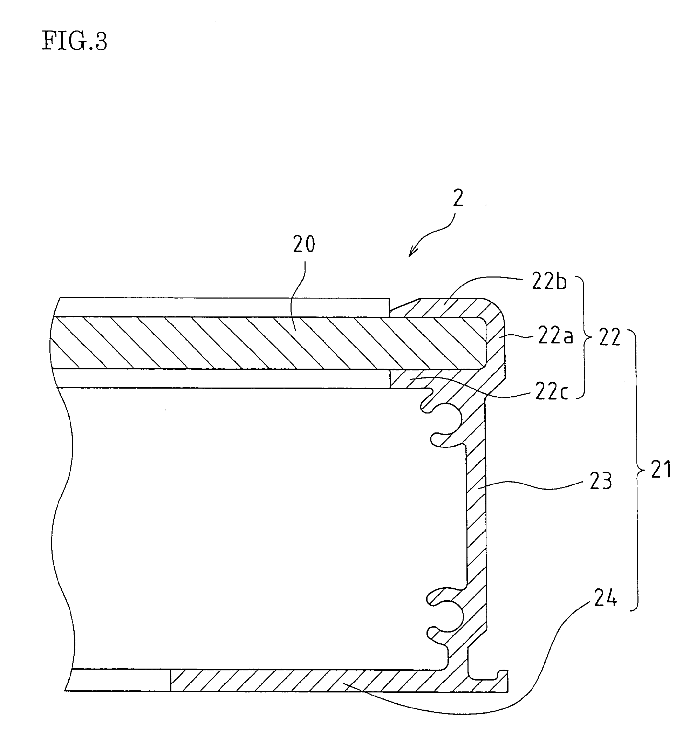

As shown in FIG. 3, the frame member 21 of each solar cell module 2 is constituted by a holding portion 22, a wall portion 23 extending downward from the holding portion 22, and a bottom piece 24 that is parallel to the solar cell panel 20 and connected to the lower end of the wall portion 23.

The holding portion 22 includes an upright holding wall 22a, and an upper holding piece 22b and a lower holding piece 22c extending from the upper end and the lower end of the holding wall 22a in the same lateral direction, and has a square U-shaped cross section. An edge of the solar cell panel 20 is sandwiched in the square U-shape.

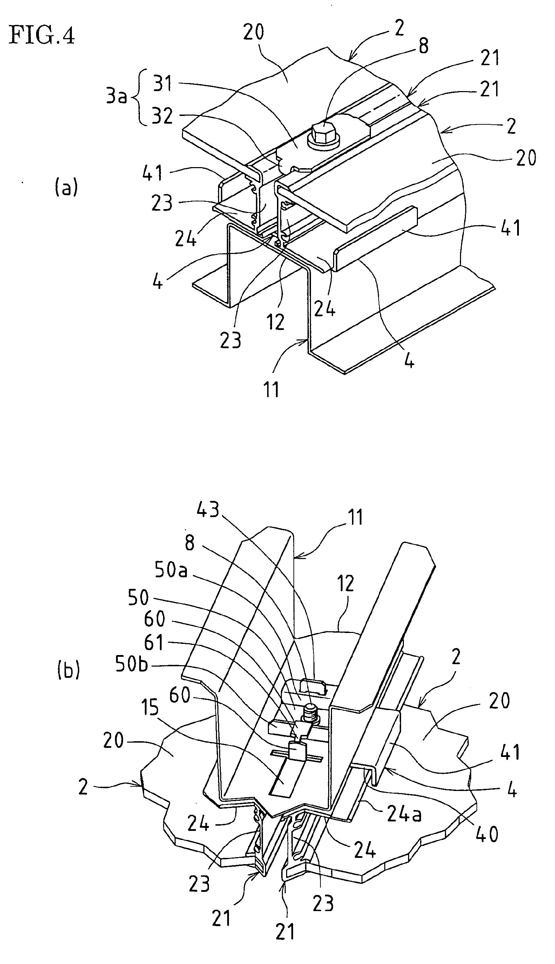

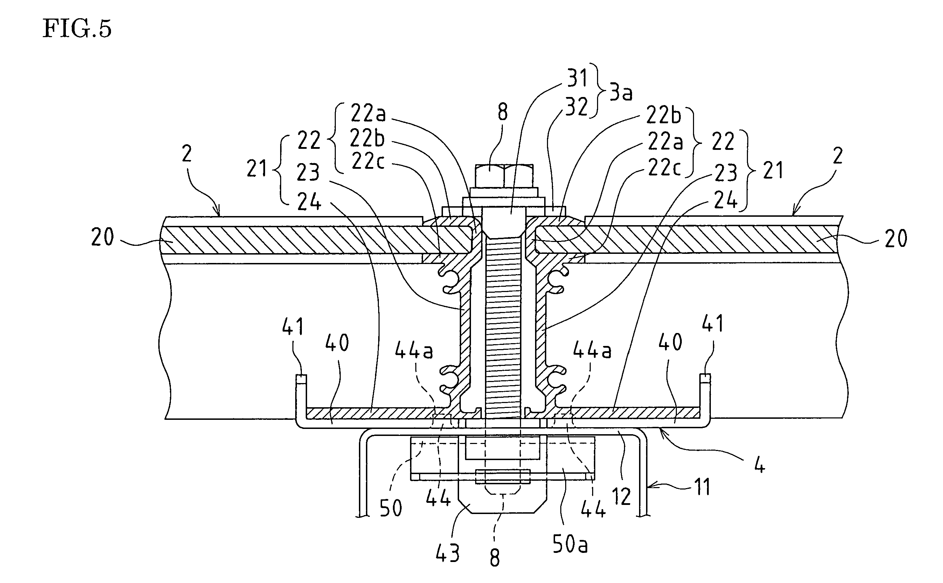

FIG. 4(a) is a perspective view showing a state in which the edges of solar cell modules 2, arranged one on the right and the other one the left, have been mounted and attached onto the attachment bar 11 of the center stand unit 10 as viewed from above, and FIG. 4(b) is a perspective view of the same as viewed from below. FIG. 5 is a cross-sectional view of the same. As shown in FIGS. 4(a), 4(b) and 5, the right and left solar cell modules 2 are attached onto the top face 12 of the attachment bar 11 of the center stand unit 10 by using, for example, an upper fixing fitting 3a serving as an upper fixture that abuts and fixes the frame members on the light-receiving face side of the solar cell modules, a lower fixing fitting 4 serving as an abutting member that abuts the side opposite to the light-receiving faces of the solar cell modules, and a bolt 8 serving as a fastening member.

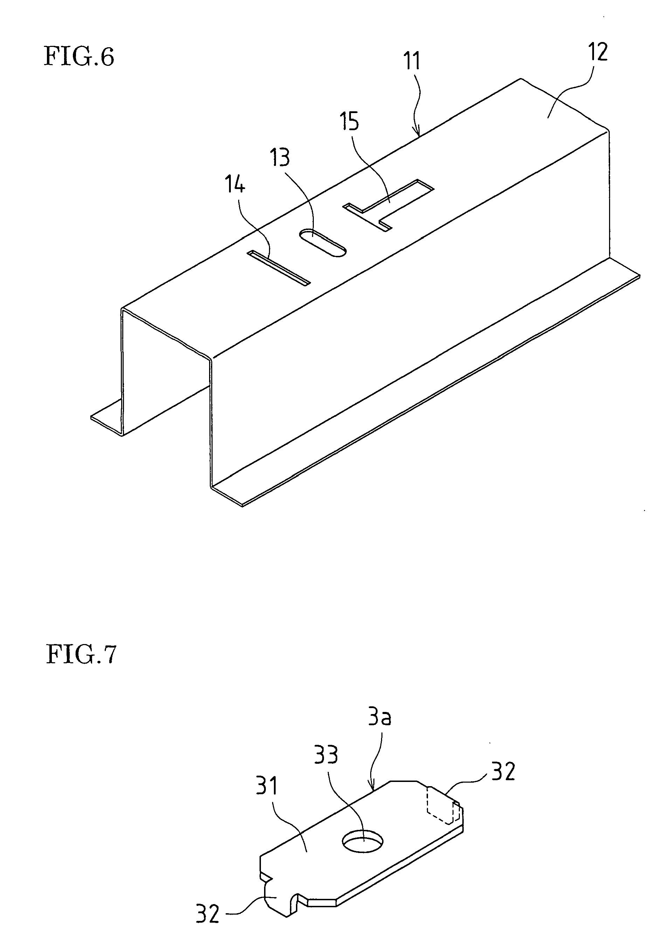

FIG. 6 is a perspective view of the attachment bar 11 of the stand unit 10. As shown in FIG. 6, in the top face 12 of the attachment bar 11, a top face hole 13 into which the bolt 8 is inserted, a T-shaped attachment aid hole 15 and a positioning slit 14 that are used for attachment of the lower fixing fitting 4 are formed.

The top face hole 13 is a long hole that is long in the right-left direction so as to allow fine adjustment of the insertion position of the bolt 8. The positioning slit 14 is provided to allow insertion of a positioning piece 43 of the lower fixing fitting 4, which will be described later, and is a long hole that is long in the right-left direction so as to allow fine adjustment of the insertion position of the positioning piece 43 of the lower fixing fitting 4.

FIG. 7 is a perspective view of the upper fixing fitting 3a as an example of an upper fixture. As shown in FIG. 7, the upper fixing fitting 3a is formed to include protrusion pieces 32 protruding downward at two edges in the front-rear direction of a flat pressing plate 31 and a pressing plate hole 33 penetrating the pressing plate 31 at the center thereof.

The pressing plate 31 is used to press, from above, the frame members 21 of two solar cell modules 2 disposed adjacent to each other on the top face 12 of the attachment bar 11 of the stand unit 10. The pressing plate hole 33 is a hole for insertion of the bolt 8. The protrusion pieces 32 of the upper fixing fitting 3a are inserted between the right and left solar cell modules 2.

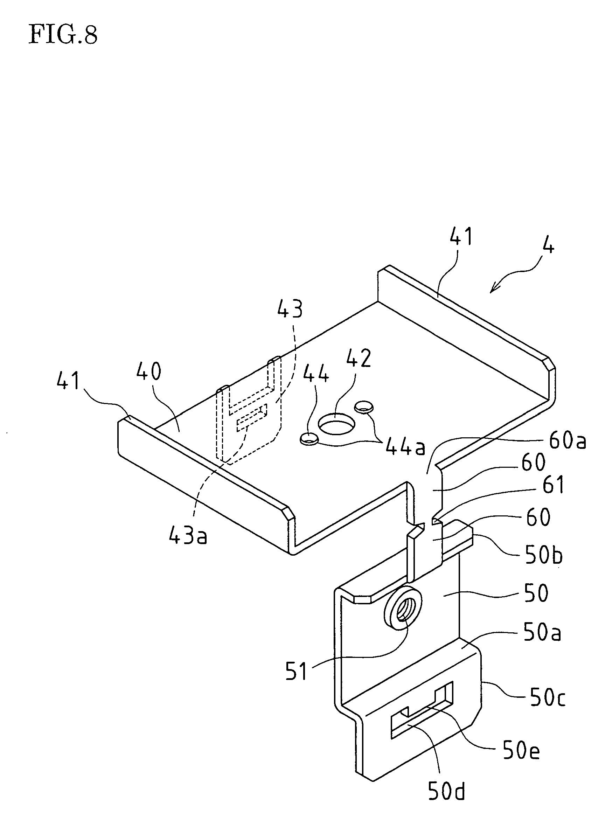

FIG. 8 is a perspective view of the lower fixing fitting 4. As shown in FIG. 8, the lower fixing fitting 4 includes an upper plate 40, a lower plate 50, and a joint portion 60 that joins the upper plate 40 and the lower plate 50. The joint portion 60 includes, in the middle thereof, a waist portion 61 provided so as to be capable of being easily bent.

In the lower plate 50, a lower plate rear wall 50b bent vertically from the rear edge of the lower plate 50 is formed, and a lower plate frontal wall 50a vent vertically from the frontal edge of the lower plate 50 is formed. Furthermore, an engaging piece 50c bent vertically from the edge of the lower plate frontal wall 50a is formed.

Claw pieces 41 bent upward are formed at the right and left edges of the upper plate 40. Also, the positioning piece 43 bent downward is formed at the rear edge of the upper plate 40. Furthermore, an engagement groove 43a is formed in the positioning piece 43.

Also, an upper plate hole 42 is formed through at the center of the upper plate 40, and a lower plate fastening hole 51 is formed in the lower plate 50. The upper plate hole 42 of the upper plate 40 is a hole for insertion of the bolt 8, and the lower plate fastening hole 51 of the lower plate 50 is a screw hole into which the bolt 8 serving as a fastening member is screwed.

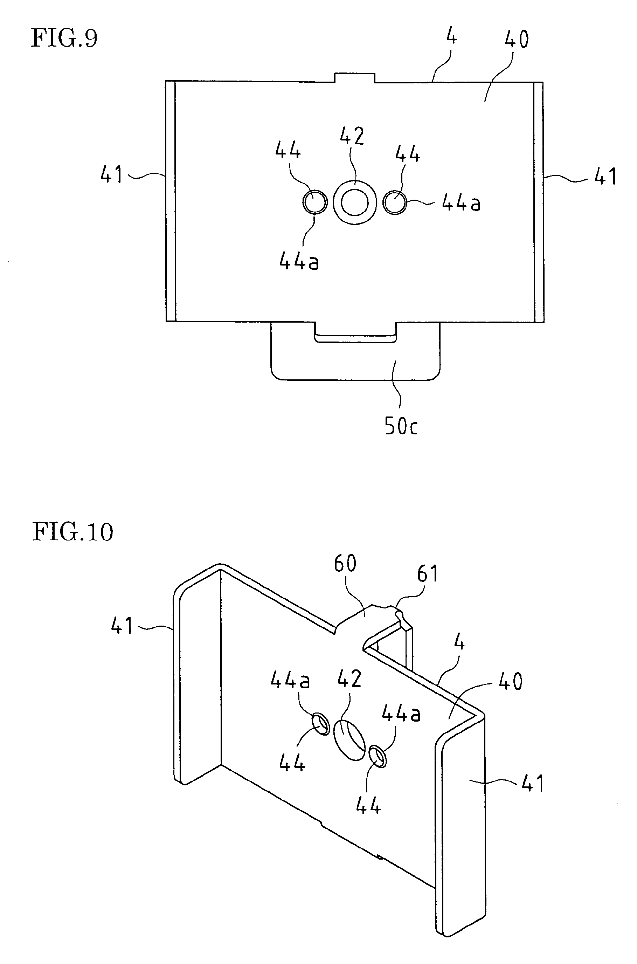

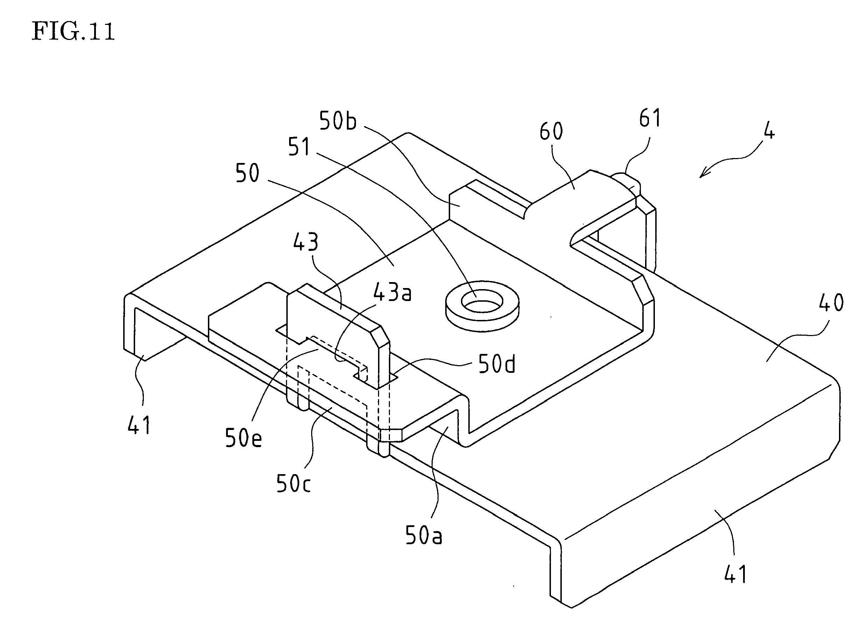

As shown in FIGS. 9 to 11, the lower fixing fitting 4 is bent at the waist portion 61 of the joint portion 60 such that the upper plate 40 and the lower plate 50 are disposed facing each other with a gap therebetween. The positioning piece 43 of the upper plate 40 is fitted into a long hole 50d of the engaging piece 50c of the lower plate 50, and a protruding portion 50e of the engaging piece 50c is fitted into the long hole 43a of the positioning piece 43, whereby the upper plate 40 and the lower plate 50 are mutually locked.

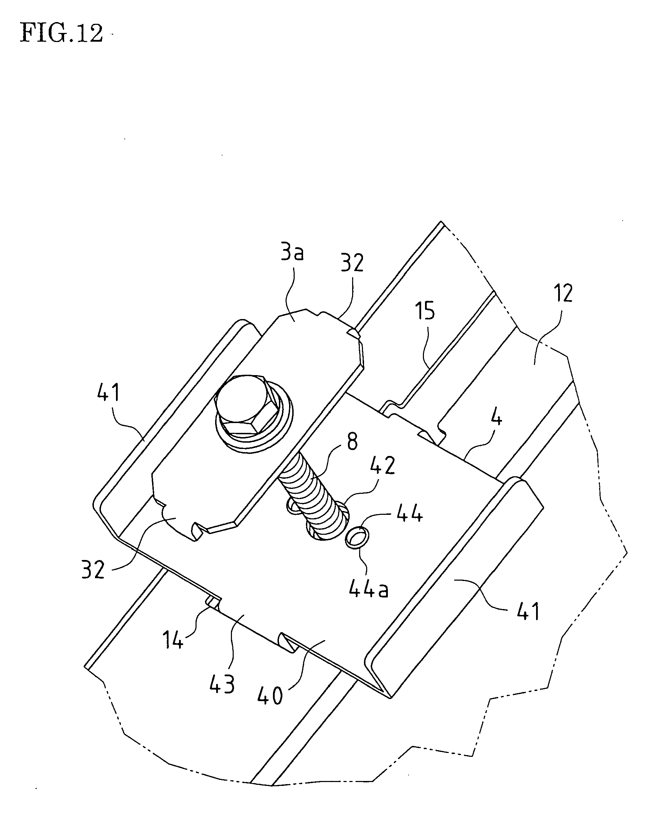

Also, as shown in FIG. 12, the lower fixing fitting 4 is locked in the T-shaped attachment aid hole 15 and the positioning slit 14 formed in the top face 12 of the attachment bar 11, with the waist portion 61 of the joint portion 60 being bent.

Then, in the state shown in FIG. 12, the bolt 8 is inserted into the pressing plate hole 33 of the upper fixing fitting 3a and the upper plate hole 42 of the upper plate 40, and then screwed into the lower plate fastening hole 51 of the lower plate 50 via the top face hole 13 formed in the top face 12. In spaces in the lower plate 50 that are on the right and left of the bolt 8, the frame members 21 of solar cell modules 2 are mounted one on the right and the other on the left, and the frame members 21 of the solar cell modules 2 are sandwiched between the lower plate 50 and the upper fixing fitting 3a.

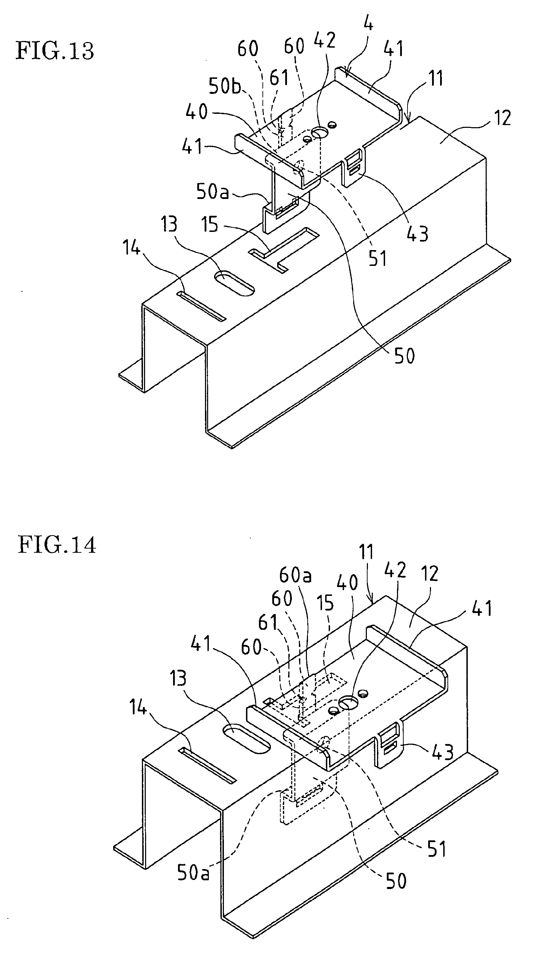

FIGS. 13 to 16 show a process for attaching the lower fixing fitting 4 to the top face 12 of the attachment bar 11 of the stand unit 10.

First, as shown in FIG. 13, the claw pieces 41 of the lower plate 50 of the lower fixing fitting 4 are disposed perpendicularly to the lengthwise direction of the top face 12 of the attachment mount 11, and in that state, as shown in FIG. 14, the positioning piece 43 of the upper plate 40 of the lower fixing fitting 4 is inserted into the attachment aid hole 15 formed in the top face 12 up to the joint portion 60.

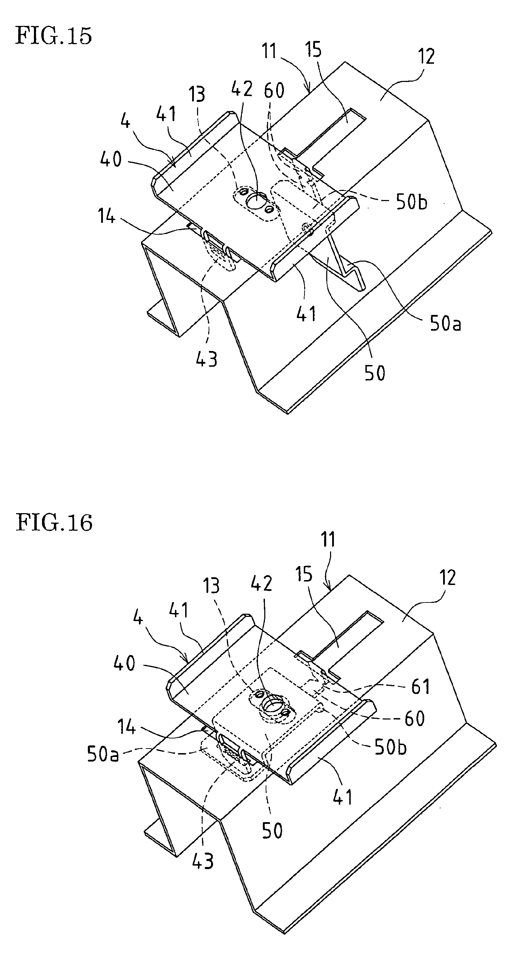

Then, as shown in FIG. 15, the entire lower fixing fitting 4 is rotated at the right angle about the joint portion 60, and the positioning piece 43 of the lower fixing fitting 4 is inserted into the positioning slit 14 formed in the top face 12 of the attachment bar 11, whereby the lower fixing fitting 4 is positioned in the front-rear direction.

Furthermore, as shown in FIG. 16, the waist portion 61 of the joint portion 60 of the lower fixing fitting 4 is bent at 90° so as to bring the lower plate 50 and the upper plate 40 to face each other via the top face 12, whereby the top face 12 of the attachment bar 11 is sandwiched between the lower plate 50 and the upper plate 40, and the lower fixing fitting 4 is attached to the top face 12. At this time, the positioning piece 43 of the upper plate 40 is fitted into the long hole 50d of the engaging piece 50c of the lower plate 50, and the protruding portion 50e of the engaging piece 50c is fitted into the long hole 43a of the positioning piece 43, whereby the upper plate 40 and the lower plate 50 are mutually locked.

In the state in which the lower fixing fitting 4 has been attached to the top face 12 in the manner described above, as shown in FIGS. 4(a), 4(b) and 5, the bottom piece 24 of the frame member 21 of a left-side solar cell module 2 is inserted and disposed in a space extending from approximately the center of the lower fixing fitting 4 to the left-side claw piece 41, and the bottom piece 24 of the frame member 21 of a right-side solar cell module 2 is inserted and disposed in a space extending from approximately the center of the lower fixing fitting 4 to the right-side claw piece 41. The upper fixing fitting 3a is mounted on the holding portions 22 of the frame members 21 of the solar cell modules 2, and the protrusion pieces 32 of the upper fixing fitting 3a are inserted between the right and left solar cell modules 2. The bolt 8 is inserted into the pressing plate hole 33 of the upper fixing fitting 3a and the upper plate hole 42 of the upper plate 40, and then fastened by screwing it into the lower plate fastening hole 51 of the lower plate 50 via the top face hole 13 formed in the top face 12, whereby the frame members 21 of the right and left solar cell modules 2 are fixedly supported in a sandwiched manner between the lower fixing fitting 4 and the upper fixing fitting 3a.

An attachment structure for attaching an edge of the solar cell module 2 for the right and left side stand units 10 will be described next. The edge of the solar cell module 2 attached to the right and left side stand units 10 is configured as shown in FIG. 3, as in the edge of the solar cell module 2 attached to the center stand unit 10.

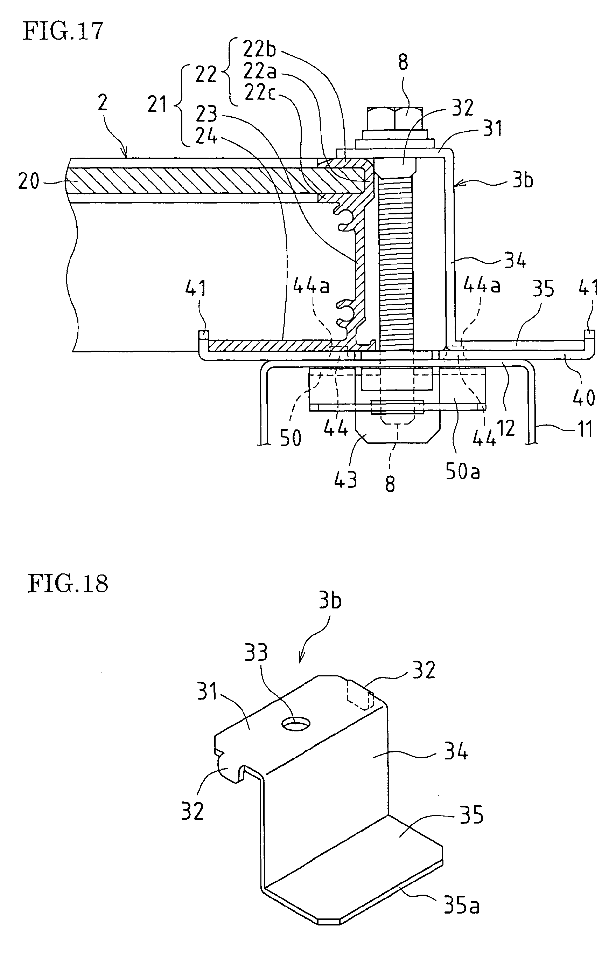

FIG. 17 is a cross-sectional view showing the attachment structure for attaching an edge of the solar cell module 2 for the right and left side stand units 10. FIG. 18 is a perspective view of an upper fixing fitting 3b used in the attachment structure of FIG. 17.

As shown in FIG. 18, the upper fixing fitting 3b is formed to include protrusion pieces 32 projecting downward at two edges in the front-rear direction of a flat pressing plate 31, a pressing plate hole 33 formed through at the center of the pressing plate 31, an upstanding wall 34 bent vertically from one edge of the pressing plate 31, and a bottom piece 35 bent laterally from the lower end edge of the upstanding wall 34.

As in the top face 12 of the center stand unit 10, a top face hole 13 for insertion of a bolt 8, and a T-shaped attachment aid hole 15 and a positioning slit 14 for attachment of the lower fixing fitting 4 are also formed in the top faces 12 of the right and left side stand units 10, and the lower fixing fitting 4 is locked in the T-shaped attachment aid hole 15 and the positioning slit 14.

As shown in FIG. 17, the bottom piece 24 of the frame member 21 of a left-side or right-side solar cell module 2 is inserted and disposed in a space extending from approximately the center of the lower fixing fitting 4 to the claw piece 41 located inside, and the bottom piece 35 of the upper fixing fitting 3b is disposed in a space extending from approximately the center of the lower fixing fitting 4 to the claw piece 41 located outside. The pressing plate 31 of the upper fixing fitting 3b is mounted on the holding portion 22 of the frame member 21 of the solar cell module 2, and the protrusion pieces 32 of the upper fixing fitting 3b are pressed against the holding portion 22 of the solar cell module 2 so as to position the solar cell module 2. The bolt 8 is inserted into the pressing plate hole 33 of the upper fixing fitting 3b and the upper plate hole 42 of the upper plate 40 of the lower fixing fitting 4, and screwed into the lower plate fastening hole 51 of the lower plate 50 via the top face hole 13 formed in the top face 12, and thereby the bolt 8 is fastened, whereby the edge of the solar cell module 2 is fixedly supported in a sandwiched manner between the lower fixing fitting 4 and the upper fixing fitting 3b.

In the solar cell module stand 1 of the present embodiment, four solar cell modules 2 are used. If a wire connection or the like for grounding solar cell modules 2 is made separately for each solar cell module 2, the operation will be complex.

To address this, in the present embodiment, only the attachment bar 11 of the center stand unit 10 is grounded by making a wire connection or the like, and the four solar cell modules 2 are grounded simply by being attached and fixed to the attachment bar 11 of the center stand unit 10.

A structure for grounding the solar cell modules 2 in the manner described above will be described next. As shown in FIGS. 8 to 10, in the upper plate 40 of the lower fixing fitting 4, in addition to the upper plate hole 42, grounding holes 44 are formed at locations that are close to the upper plate hole 42 and that are opposite to each other with the upper plate hole 42 therebetween. In other words, the grounding holes 44 are formed in a portion of the abutting member that abuts the frames of the solar cell modules.

The grounding holes 44 each have, around the circumference thereof, a sharp-edged annular protruding flange 44a. In the state in which the lower fixing fitting 4 has been attached to the attachment bar 11 of the stand unit 10, the sharp-edged annular protruding flanges 44a of the grounding holes 44 are projecting toward the side on which the upper plate 40 of the lower fixing fitting 4 is facing upward, or in other words, toward the bottom piece 24 of the frame member 21 of the solar cell modules 2 that abut the upper plate 40.

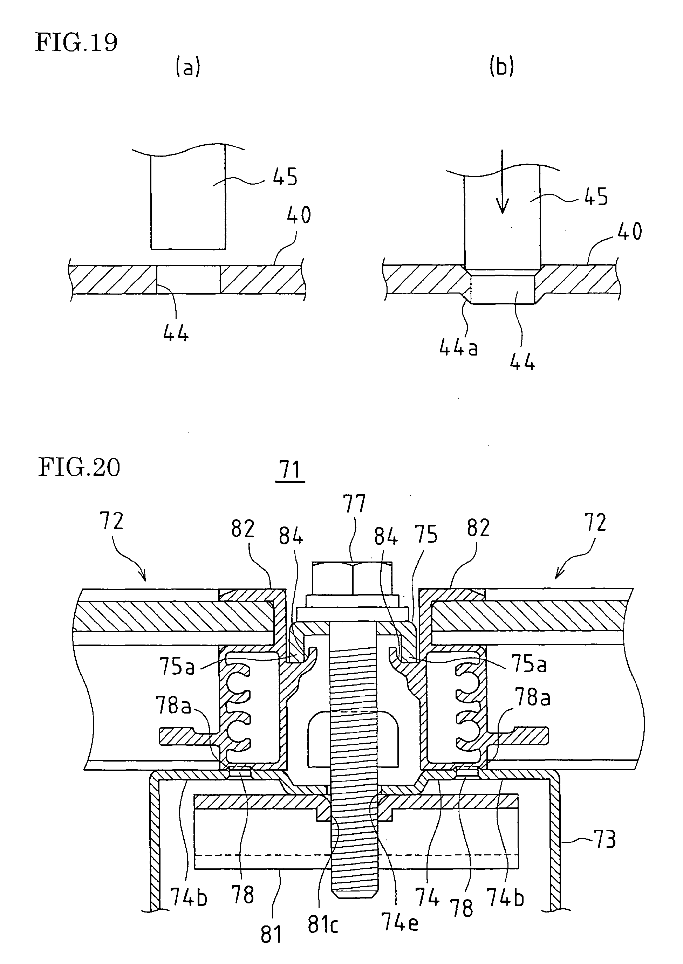

The sharp-edged annular protruding flanges 44a of the grounding holes 44 may be each formed by, for example, as shown in FIGS. 19(a) and 19(b), forming a grounding hole 44 in the upper plate 40 of the lower fixing fitting 4 by drilling or the like, and pressing a pin 45 having an outer diameter slightly larger than the inner diameter of the grounding hole 44 against the circumference of the grounding hole 44 with a strong force so as to project the opposite circumference of the grounding hole 44 that is opposite to the pin 45.

In the state as shown in FIG. 5 in which the frame members 21 of the solar cell modules 2 are fixedly supported in a sandwiched manner between the lower fixing fitting 4 and the upper fixing fitting 3a, the annular protruding flanges 44a on the surface of the upper plate 40 of the lower fixing fitting 4 are pressed against the surfaces of the bottom pieces 24 of the frame members 21 of the solar cell modules 2. When the bolt 8 is tightly fastened, the upper plate 40 and the bottom pieces 24 of the frame members 21 come into tightly abutting contact with each other, and the annular protruding flanges 44a on the surface of the upper plate 40 press into the surfaces of the bottom pieces 24 of the frame members 21, establishing electrical connections.

The grounding holes 44 are not necessarily disposed diametrically opposite to each other with the upper plate hole 42 therebetween as shown in FIG. 9 as long as the grounding holes 44 are near the upper plate hole 42, and the two grounding holes 44 may be offset upward or downward in the drawing relative to the upper plate hole 42. Also, the two grounding holes 44 may be offset in opposite directions. In addition, the grounding holes 44 are not necessarily circular as shown in FIG. 9 as long as the protruding flange portions are formed to have an annular shape. The number of grounding holes 44 may be one or more than one as long as the grounding hole 44 contacts the frame member 21 of the solar cell module 2. Also, the grounding holes 44 may have any size as long as the abutting member can achieve the object of holding the solar cell modules 2. The larger the size of the grounding holes 44, the more contact portions to the frame members 21 of the solar cell modules 2 are to be obtained, and therefore stable electrical connections can be ensured.

Also, if the diameter of the grounding holes 44 in the offset direction of the upper plate 40 is larger than the difference in the size of the diameter between the upper plate hole 42 and the bolt 8, or in other words, the maximum allowed value for the offset width of the upper plate 40, even if the bolt 8 is re-fastened, the indentation around the grounding hole 44 and an indentation formed after re-fastening of the bolt 8 overlap such that the lines cross each other, and therefore there is little influence of the indentation before re-fastening, and an electrical connection can be reliably ensured.

The diameter of the grounding holes 44 can be, for example, 5 mm, which is larger than the difference (3 mm) between the diameter (11 mm) of the upper plate hole 42 and the diameter (8 mm) of the bolt 8.

With priority given to their strength to support the solar cell modules 2, the attachment bar 11, the vertical bar 16, the lower fixing fitting 4, the upper fixing fitting 3a and the like are made of a plated steel plate and are brought into abutting contact with each other by bolting or the like, establishing an electrical connection with each other. Accordingly, when the attachment bar 11 is grounded, the vertical bar 16, the lower fixing fitting 4, the upper fixing fitting 3a and the like are also grounded, and the frame members 21 of the solar cell modules 2 into which the annular protruding flanges 44a on the surface of the upper plate 40 of the lower fixing fitting 4 press are grounded as well.

As for any of the four solar cell modules 2, because the frame member 21 of the solar cell module 2 is fixedly supported in a sandwiched manner between the lower fixing fitting 4 and the upper fixing fitting 3a, the annular protruding flanges 44a on the surface of the upper plate 40 of the lower fixing fitting 4 can press into the surfaces of the frame members 21 of the solar cell modules 2, establishing electrical connections.

Accordingly, when the four solar cell modules 2 are attached and fixed onto the attachment bar 11 of the center stand unit 10, the solar cell modules 2 are grounded at the same time.

Also, because the annular protruding flanges 44a on the surface of the upper plate 40 of the lower fixing fitting 4 have an annular shape, the annular protruding flanges 44a can receive force from any direction that tries to push over the annular protruding flanges 44a in a dispersed manner over the entire annular protruding flange 44a, and have a high strength against such force from any direction. For this reason, even when the solar cell modules 2 are adjusted in position, or the solar cell modules 2 are offset on impact after the annular protruding flanges 44a on the surface of the upper plate 40 have pressed into the frame members 21 of the solar cell modules 2, the annular protruding flanges 44a will not be collapsed or crushed, and therefore the electrical connections between the solar cell modules 2 and the upper plate 40 of the lower fixing fitting 4 will not be cut off, and stable grounding for the solar cell modules 2 can be maintained.

For example, even when an aluminum material is used for the frame members 21 of the solar cell modules 2, and an insulating oxide film is formed on the aluminum surface, the annular protruding flanges 44a will not be collapsed or crushed due to the frame members 21 of the solar cell modules 2 being adjusted in position or being offset, and therefore the annular protruding flanges 44a can break through the oxide film on the aluminum surface and press into the frame members 21 of the solar cell modules 2, establishing electrical connections, as a result of which stable grounding for the solar cell modules 2 can be maintained.

FIG. 20 is a partial cross-sectional view of a solar cell module stand according to a second embodiment of the present invention.

In a solar cell module stand 71 of the present embodiment, right and left solar cell modules 72 are attached onto a top face 74 of an attachment bar 73 of a stand unit by using, for example, an upper fixing fitting 75 serving as an upper fixture, a tapping fitting 81 and a bolt 77 serving as a fastening member.

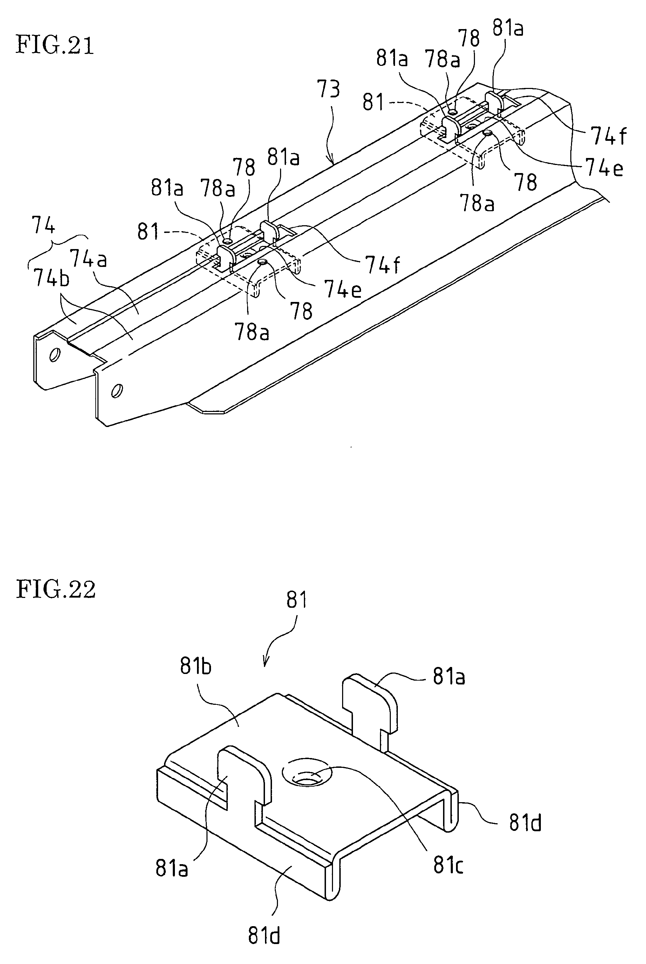

FIG. 21 is a perspective view of the attachment bar 73 of the stand unit. As shown in FIG. 21, the attachment bar 73 is formed to include a recess portion 74a at the center of the top face 74, and mounting portions 74b provided on both sides of the recess portion 74a positioned at the center. Engagement holes 74e are formed in a plurality of locations in the recess portion 74a positioned at the center. The tapping fitting 81 is attached to each engagement hole 74e.

Also, in the mounting portions 74b of the attachment bar 73, grounding holes 78 are formed in opposing locations across each of the engagement holes 74e. The grounding holes 78 each have, around the circumference thereof, a sharp-edged annular protruding flange 78a, and the sharp-edged annular protruding flanges 78a of the grounding holes 78 are projecting upward.

As shown in FIG. 22, the tapping fitting 81 includes a middle plate 81b having a screw hole 81c formed therein, double-folded side plates 81d provided on both sides of the middle plate 81b, and T-shaped support pieces 81a projecting from the centers of the corresponding side plates 81d.

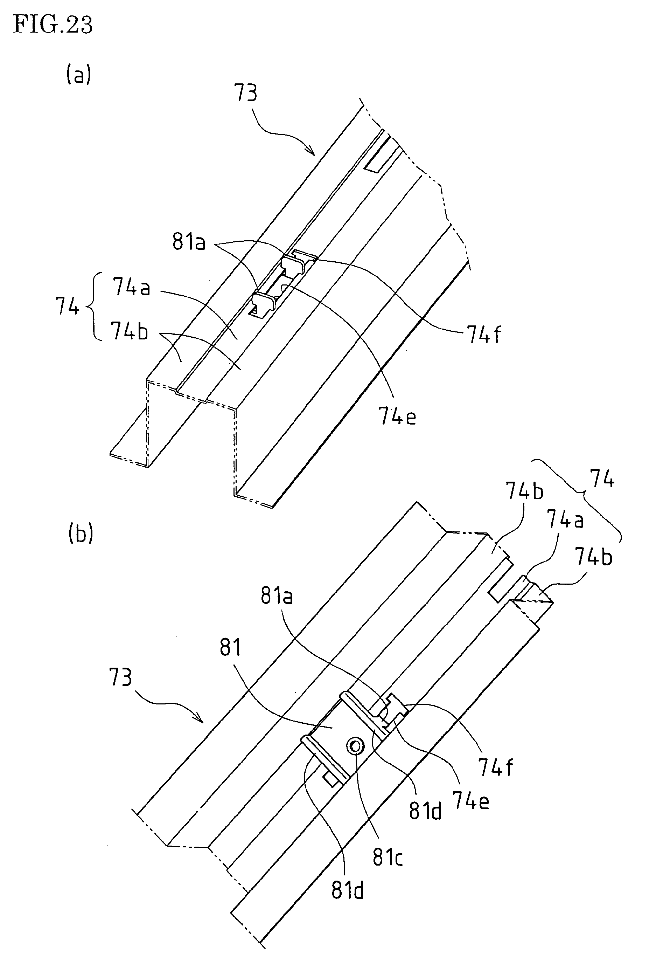

As shown in FIGS. 23(a) and 23(b), one of the support pieces 81a of the tapping fitting 81 is inserted into an insertion slit 74f from the underside of the top face 74 of the attachment bar 73 and then moved from the insertion slit 74f to an engagement hole 74e, and subsequently, the other support piece 81a of the tapping fitting 81 is inserted into the insertion slit 74f and then moved from the insertion slit 74f to the engagement holes 74e, such that the T-shaped head portions of the support pieces 81a are hooked over the engagement hole 74e and thereby the tapping fitting 81 is attached to the engagement hole 74e of the top face 74. At this time, the side plates 81d of the tapping fitting 81 are disposed perpendicular to the side plates of the attachment bar 73.

After the tapping fitting 81 has been attached to the engagement holes 74e of the attachment bar 73 in the manner described above, as shown in FIG. 19, frame members 82 of right and left solar cell modules 72 are mounted and disposed on the two mounting portions 74b of the attachment bar 73, the upper fixing fitting 75 having a square U-shaped cross section is disposed between the frame members 82 of the solar cell modules 72, and both sides 75a of the upper fixing fitting 75 are inserted into grooves 84 of the frame members 82 of the solar cell modules 72. The bolt 77 is fastened by screwing the bolt 77 into a screw hole 81c of the tapping fitting 81 via an insertion hole 75a of the upper fixing fitting 75 and the engagement hole 74e of the top face 74 of the attachment bar 73, whereby the frame members 82 of the right and left solar cell modules 72 are each fixedly supported in a sandwiched manner between one of the two mounting portions 74b of the attachment bar 73 and the upper fixing fitting 75.

In this state, by the bolt 77 being tightly fastened, the two mounting portions 74b of the attachment bar 73 and the bottom faces of the frame members 82 of the solar cell modules 72 come into tightly abutting contact with each other, and thereby sharp-edged annular protruding flanges 78a provided in the mounting portions 74b press into bottom faces of the frame members 82 of the solar cell modules 72, establishing electrical connections.

Accordingly, with the attachment bar 73 that has been grounded by a wire connection or the like, the right and left solar cell modules 72 can be grounded via the attachment bar 73 at the same time when the solar cell modules 72 are attached and fixed onto the attachment bar 73.

Up to here, preferred embodiments of the present invention have been described with reference to the accompanying drawings, but it is needless to say that the present invention is not limited to the examples given above. It is apparent that those skilled in the art can conceive of various modified examples or revised examples within the scope defined by the appended claims, and such examples also fall within the technical scope of the present invention.

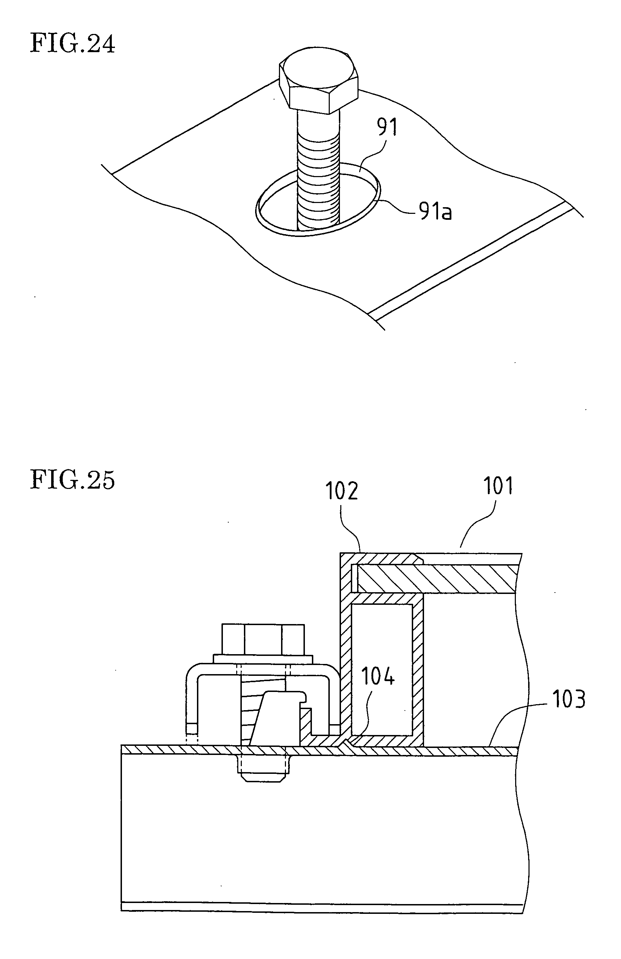

For example, a configuration as shown in FIG. 24 may be used in which the diameter of a hole 91 into which a bolt is inserted is increased, a sharp-edged annular protruding flange 91a is formed around the circumference of the hole 91, and the annular protruding flange 91a is abutted to the frame member of the solar cell module.

The above embodiments have been described using the upper fixing fittings that abut and fixes the frame members on the light-receiving face side of the solar cell modules, but a light-transmitting protection material for protecting the solar cells may be directly sandwiched without the light-receiving face side frame member. The fastening member and the upper fixture are preferably made of a metal in terms of strength, but the material is not limited to metals as long as high strength materials, such as graphite, can replace metals.

It is also possible to form the grounding holes in the attachment bar itself, and sandwich and fasten the frame of the solar cell module between the upper fixture and the attachment bar. Alternatively, it is also possible to form the grounding holes in the upper fixture and sandwich and fasten the frame of the solar cell module between the upper fixture and the attachment bar. In the case where the grounding holes are formed in the upper fixture, the fastening member and the upper fixture are preferably made of a metal.

As described above, the attachment bar may be grounded, and in the case where the solar cell modules are electrically connected to each other via the grounding holes, the solar cell modules provided at the ends of a solar power generation system in which the solar cell modules are grounded in an array may be grounded.

In the case of a solar power generation system including a large number of solar cell modules as described above, for each solar cell module, a wire connection for grounding the solar cell modules can be done simultaneously with installation of the solar cell module, and thus the effect of eliminating complex tasks is large.

The present invention may be embodied in various other forms without departing from the gist or essential characteristics thereof. Therefore, the embodiments disclosed in the embodiments given above are to be considered in all respects as illustrative and not limiting. The scope of the invention is indicated by the appended claims rather than by the foregoing description, and all modifications or changes that come within the meaning and range of equivalency of the claims are intended to be embraced therein.

### Industrial Applicability

The present invention is suitably used in a solar cell module and a solar power generation system using a solar cell module.

### Description of Reference Numerals

- 1, 71: Solar Cell Module Stand
- 2, 72: Solar Cell Module
- 3a, 75: Upper Fixing Fitting
- 4: Lower Fixing Fitting
- 8, 77: Bolt
- 10: Stand Unit
- 11, 73: Attachment Bar
- 12, 74: Top Face
- 16: Vertical Bar
- 20: Solar Cell Panel
- 21,82: Frame Member
- 31: Pressing Plate
- 44, 78, 91: Grounding Hole
- 44a, 78a, 91a: Annular Protruding Flange
- 81: Tapping Fitting

## Claims

1. A solar cell module stand for fixedly supporting a solar cell module, the stand comprising:
an abutting member that abuts a frame of the solar cell module;
a fastening member that fastens the frame of the solar cell module and the abutting member;
a through hole formed in the abutting member; and
a protruding flange projecting toward the frame of the solar cell module and provided at the circumference of the through hole,
wherein the protruding flange around the circumference of the through hole of the abutting member is caused to press into the frame of the solar cell module by fastening the fastening member, thereby establishing an electrical connection.

2. The solar cell module stand according to claim 1,
wherein the abutting member includes a fastening hole into which the fastening member is screwed or inserted, and the through hole having the protruding flange is provided around the fastening hole.

3. The solar cell module stand according to claim 1,
wherein the abutting member includes an insertion hole into which the fastening member is inserted, and the insertion hole is the through hole having the protruding flange.

4. The solar cell module stand according to claim 1,
wherein the protruding flange is formed in an annular shape around the circumference of the through hole.

5. The solar cell module stand according to any one of claims 1 to 4,
wherein the abutting member is a holding member that receives and holds the frame of the solar cell module.

6. The solar cell module stand according to any one of claims 1 to 4,
wherein the abutting member is a bar on which the frame of the solar cell module can be mounted.

7. A solar power generation system comprising the solar cell module stand according to any one of claims 1 to 6,
wherein a plurality of solar cell module frames are fastened to the abutting member with the fastening member, thereby establishing an electrical connection.
